# EUROPEAN PATENT SPECIFICATION

(11) **EP 2 163 464 B1**
(45) Date of publication and mention of the grant of the patent: **27.11.2013**
(21) Application number: 09709221.7
(22) Date of filing: 16.01.2009
(51) Int. Cl.: B62J 17/02

(54) **Straddle-type vehicle**
Grätschsitz-Fahrzeug
Véhicule du type monté à califourchon

(30) Priority: 18.01.2008 JP 2008009842
(43) Date of publication of application: 17.03.2010
(73) Proprietor: Yamaha Hatsudoki Kabushiki Kaisha, Iwata-shi, Shizuoka 438-8501 (JP)
(72) Inventor: AKAO, Takuya, Iwata-shi Shizuoka 438-8501 (JP); OHZONO, Gen, Iwata-shi Shizuoka 438-8501 (JP)
(74) Representative: Stöckeler, Ferdinand
(86) International application number: PCT/JP2009/050547
(87) International publication number: WO 2009/098925

(56) References cited:
- EP-A1- 2 017 168
- JP-A- 1 233 180
- JP-A- 1 233 187
- JP-A- 2 185 881
- JP-A- 2003 072 627
- JP-B2- 3 585 907

## Description

### Technical Field

The present invention relates to a straddle-type vehicle.

### Background Art

For example, a structure of a vehicle body cover (front cowl) mounted around the handlebars of a straddle type vehicle is described in documents such as Japanese Unexamined Patent Application Publication No. 2003-72627. This publication discloses a technique in which a vehicle body cover around a head pipe to which handlebars are attached is constituted by three cover components that are fastened together.
Patent Document 1: Japanese Unexamined Patent Application Publication No. 2003-72627

### Disclosure of Invention

### Problems to be Solved by the Invention

In the above-described publication, to be specific, three cover components including a front leg shield component that covers the front side of the head pipe, an inner cover that is disposed behind the front wheel, and a rear leg shield component that covers the rear side of the head pipe are fastened together. In this case, when a force is applied to the cover so as to move the cover outward, the force is focused on the fastening part, such as screws. Therefore, it is necessary, for example, to increase the rigidity of the fastening part. Moreover, because edges at which the covers are joined are exposed, it is necessary to join the edges of the covers more precisely so as to provide a good appearance, which requires additional work.

Non-prepublished EP 2017168 A1 discloses a straddle-type vehicle comprising a head pipe and a body cover adapted to cover at least a portion of the head pipe. The body cover comprises a front cowl for covering a front portion of the head pipe and a leg shield for covering a rear portion of the head pipe. The leg shield has an upper member and a lower member, wherein the front cowl and the upper and lower members of the leg shield overlap each other at an overlapping portion and are adapted to be secured together at said overlapping portion by fasteners.

JP 2 185881 A discloses a body cowl for a motor scooter. The body cowl is divided a floor board, a frame cover, a leg shield, a side leg shield, a front shield and lower shields. The front shield is connected to an upper end of the leg shield. Symmetrical lower shields are connected to the front shield and the frame cover each.

### Means for Solving the Problems

A straddle-type vehicle according to the invention includes a head pipe though which a steering shaft is inserted. The straddle-type vehicle includes a first cover at least a part of which is disposed in front of the head pipe in side view of the straddle-type vehicle, and a third cover adjacent to the first cover, at least a part of the third cover being disposed below the head pipe in side view of the straddle-type vehicle. Moreover, the straddle-type vehicle includes a second cover at least a part of which is disposed on a side of the body frame in front view of the straddle-type vehicle. The second cover includes a covering surface that covers a side of the vehicle, a first bent edge that is bent away from the covering surface toward the inside of the straddle-type vehicle and joined to a side edge of the first cover from the outside (outer side), and a second bent edge that is bent away from the covering surface toward the inside of the straddle-type vehicle and joined to a side edge of the third cover from the outside. Moreover, the straddle-type vehicle includes a protruding portion in which a side edge of the first cover or the third cover protrudes toward the front of the straddle-type vehicle, wherein a side of the protruding portion is covered with the covering surface of the second cover, wherein the side edge of the first cover extends in a vehicle width direction and the first bent edge is joined to an upper surface of the side edge of the first cover so as to cover it.

### Advantages

In the straddle-type vehicle, the second cover, which includes the covering surface including the first bent edge and the second bent edge, supports the side edges of the first cover and the third cover from the outside. Thus, a force to move the first cover and the third cover outward can be received by the second cover as a whole. Therefore, the rigidity of the covers can be improved as compared with the rigidity of existing covers.
Moreover, the second cover covers the edges of first cover and the third cover from the outside, which are the parts at which the covers are joined. Thus, mating surfaces can be made inconspicuous by just attaching the second cover. Therefore, the outward appearance is improved and the covers can be easily attached as compared with existing covers.

### Brief Description of Drawings

[Fig. 1] Fig. 1 is a left side view of a straddle type vehicle according to an embodiment of the invention.
[Fig. 2] Fig. 2 is a left side view of the straddle type vehicle according to the embodiment of the invention.
[Fig. 3] Fig. 3 is a left side view of a cowl of the straddle type vehicle according to the embodiment of the invention.
[Fig. 4] Fig. 4 is a side view of a left (left side) side cowl of the straddle type vehicle according to the embodiment of the invention.
[Fig. 5] Fig. 5 is a perspective view of a left (left side) side cowl of the straddle type vehicle according to the embodiment of the invention, which is viewed from the inside.
[Fig. 6] Fig. 6 is a view showing a part at which edges of a front cover and a side cover according to the embodiment of the invention are joined.
[Fig. 7A] Fig. 7A is a sectional view taken along arrow A-A in Fig. 4.
[Fig. 7B] Fig. 7B is a sectional view taken along arrow B-B in Fig. 4.
[Fig. 7C] Fig. 7C is a sectional view taken along arrow C-C in Fig. 4.

### Best Mode for Carrying Out the Invention

Hereinafter, a straddle type vehicle according to an embodiment of the invention is described with reference to the drawings. In the drawings, components or parts performing the same function are denoted by the same numeral. The invention is not limited to the following embodiment. The terms "front", "rear", "left", "right, "up", and "down" refer to the directions from the viewpoint of a rider in a normal riding position. Where necessary, the front (front side) is denoted by "Fr", and the rear (rear side) is denoted by "Rr". The drawings are drawn so as to be viewed in such a manner that the numerals are oriented in the proper direction.

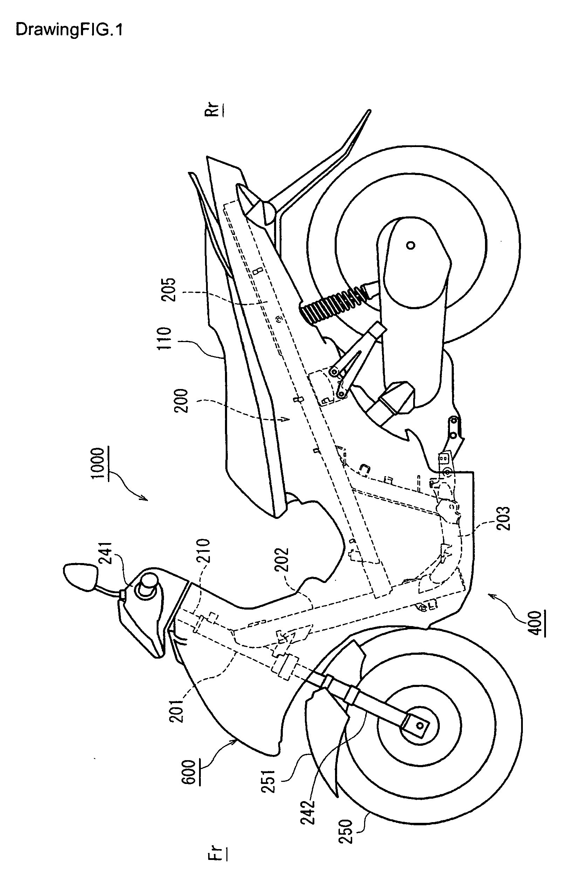

As shown in Fig. 1, in the embodiment, a straddle type vehicle 1000 is a scooter type motorcycle. A vehicle body cover 400, which is resin-made, is mounted on a body frame 200. The body frame 200 includes a head pipe 201, a main tube 202, a down tube 203, and a seat rail 205. In the embodiment, the head pipe 201, the main tube 202, the down tube 203, and the seat rail 205 are welded together. Cross members (not shown) are mounted on the body frame 200 to ensure rigidity. The vehicle body cover 400, a seat 110, and other components (not shown) such as an engine, a radiator, and a fuel tank of the straddle type vehicle 1000 are mounted at predetermined positions of the body frame 200 using the cross members and various brackets.

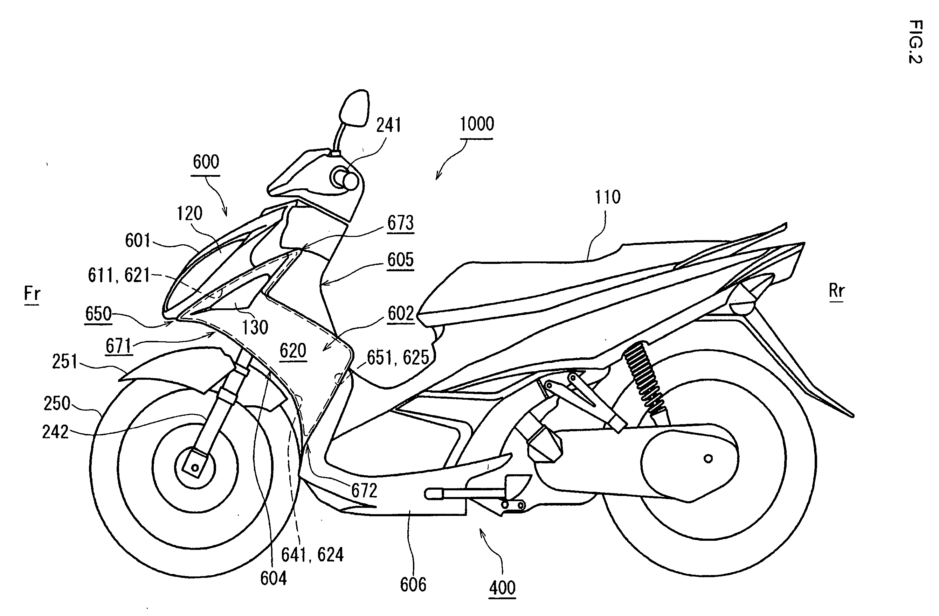

As shown in Fig. 1, in the embodiment, the head pipe 201 is disposed in the front of the body frame 200, and a steering shaft 210 is inserted through the head pipe 201. As shown in Fig. 1, handlebars 241 are attached to the top of the steering shaft 210, and a front fork 242 is attached to the bottom of the steering shaft 210. A front wheel 250 is attached to the front fork 242. In the embodiment, a front fender 251 is provided so as to cover the upside (upper side) of the front wheel 250. As shown in Fig. 2, the straddle type vehicle 1000 according to the embodiment has a cowl 600 that serves as a vehicle body cover around the head pipe 201. Hereinafter, the cowl 600 is described.

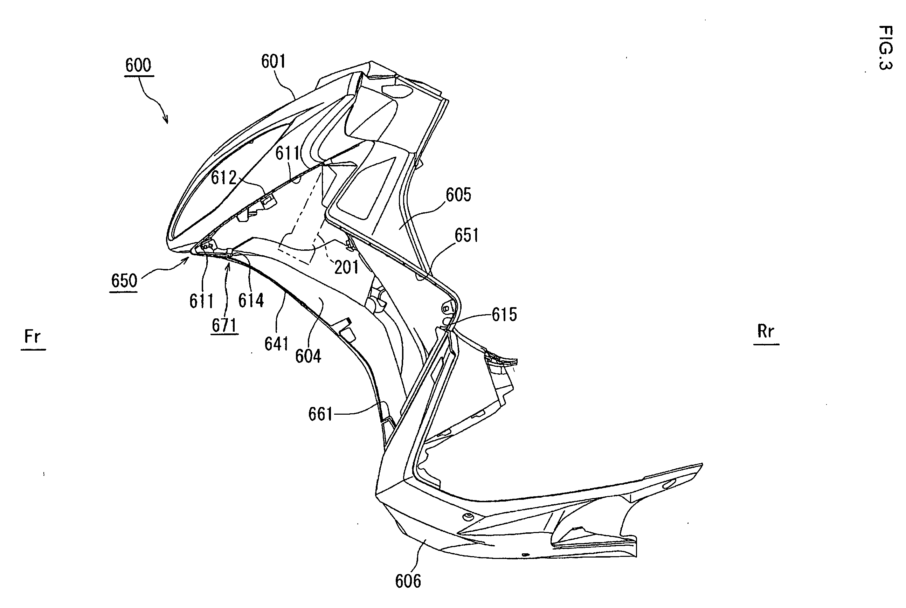

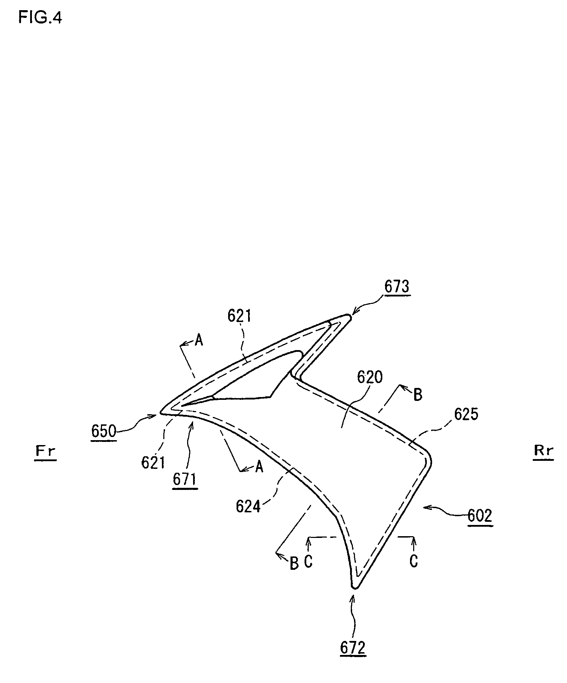

As shown in Figs. 2 to 4, the cowl 600 includes a front cover 601 (first cover), a side cover 602 (second cover), (see Figs. 2 and 4), an inner fender 604 (third cover), a leg shield 605 (fourth cover), and an under cover 606 (fourth cover). Fig. 3 shows a state in which the side cover 602 is removed from the cowl 600.

As shown in Fig. 3, at least a part of the front cover 601 serving as the first cover is disposed in front of the head pipe 201 in side view of the straddle-type vehicle 1000.
Moreover, the inner fender 604 serving as the third cover is adjacent to the front cover 601 (first cover), and at least a part of the inner fender 604 is disposed below (underside of) the head pipe 201 in side view of the straddle-type vehicle 1000.
Moreover, at least a part of the side cover 602 serving as the second cover is disposed on a side of the body frame 200 (see Fig. 1) in front view (not shown) of the straddle-type vehicle 1000. As shown in Figs. 2 and 3, in this embodiment, the side cover 602 is disposed on a side of the head pipe 201 constituting a part of the body frame 200.

As shown in Figs. 2 and 4, the side cover 602 (second cover) includes a covering surface 620, a first bent edge 621, a second bent edge 624, and third bent edges 625 and 626. The covering surface 620 is a surface that covers a side of the vehicle. The first bent edge 621 is bent away from the covering surface 620 toward the inside of the straddle-type vehicle 1000 and joined to a side edge 611 (see Fig. 3) of the front cover 601 (first cover) from the outside. Moreover, the second bent edge 624 is bent away from the covering surface 620 toward the inside of the straddle-type vehicle 1000, and joined to a side edge 641 of the inner fender 604 (third cover) from the outside.

As shown in Figs. 2 and 3, in this embodiment, the side edge 611 of the front cover 601 (first cover) includes a protruding portion 650 protruding toward the front of the straddle-type vehicle 1000. A side of the protruding portion 650 is covered with the covering surface 620 of the side cover 602 (second cover).

In the straddle-type vehicle 1000, mating surfaces of the front cover 601 (first cover), the inner fender 604 (third cover), and the side cover 602 (second cover) are inconspicuous in the outward appearance of the straddle-type vehicle 1000, which allows the mating surfaces to have a good appearance.

In particular, the part at which the front cover 601 (first cover) and the inner fender 604 (third cover) are joined is covered with the side cover 602 (second cover) from the outside. That is, because the edges 611 and 641 of the front cover 601 (first cover) and the inner fender 604 (third cover) are covered with the side cover 602 (second cover), the mating surfaces can be made inconspicuous only by attaching the side cover 602 (second cover). Therefore, the outward appearance can be improved and the covers 601, 602, and 604 can be easily assembled together as compared with existing covers.

As shown in Figs. 2 and 3, in this embodiment, the side edge 611 of the front cover 601 (first cover) includes the protruding portion 650 that protrudes toward the front of the straddle-type vehicle 1000. A side of the protruding portion 650 is covered with the covering surface 620 of the side cover 602 (second cover). With such a structure, the rigidity and the outward appearance of the protruding portion 650 are improved.

In the straddle-type vehicle 1000, side edges of the front cover 601 (first cover) and the inner fender 604 (third cover) are supported with the side cover 602 (second cover) from the outside, wherein the side cover 602 includes the covering surface 620 including the first bent edge 621 and the second bent edge 624. Thus, when a force is applied so as to move the front cover 601 (first cover) and the inner fender 604 (third cover) to the outside, the force can be received by the side cover 602 (second cover) as a whole. Therefore, the rigidity of the cover can be improved as compared with the existing covers.

Moreover, in the embodiment, the first bent edge 621 and the second bent edge 624 are formed contiguous with each other. Thus, the rigidity of the side cover 602 and the rigidity of the cowl 600 are improved. In particular, the first bent edge 621 and the second bent edge 624, which are joined to the edges 611 and 641 of the front cover 601 (first cover) and the inner fender 604 (third cover), are formed contiguous with each other. Therefore, the rigidity of the part at which the front cover 601 (first cover) and the inner fender 604 (third cover) are joined is improved.

In the embodiment, the leg shield 605 and the under cover 606 serving as the fourth cover are disposed behind the front cover 601 (first cover) or the inner fender 604 (third cover). As shown in Figs. 2 and 4, the side cover 602 (second cover) includes the third bent edges 625 and 626. Moreover, the third bent edges 625 and 626 are bent away from the covering surface 620 toward the inside of the straddle-type vehicle 1000, and joined to side edges 651 and 661 of the leg shield 605 (fourth cover) and the under cover 606 (fourth cover) from the outside. Thus, the rigidity of the side cover 602 and the rigidity of the cowl 600 are improved.

In the embodiment, the first bent edge 621 and the third bent edge 625 of the side cover 602 are formed contiguous with each other. That is, the first bent edge 621 joined to the front cover 601 (first cover) and the third bent edge 625 joined to the edge 651 of the leg shield 605 (fourth cover) are contiguous with each other. Therefore, the rigidity of the part at which the front cover 601 (first cover) and the leg shield 605 (fourth cover) are joined is improved.

The second bent edge 624 and the third bent edge 626 of the side cover 602 are formed contiguous with each other. That is, the second bent edge 624 joined to the inner fender 604 (second cover) and the third bent edge 626 joined to the edge 661 of the under cover 606 (fourth cover) are contiguous with each other. Therefore, the rigidity of the part at which the inner fender 604 (second cover) and the under cover 606 (fourth cover) are joined is improved.

In this way, in the embodiment, the first bent edge 621, the second bent edge 624, and the third bent edges 625 and 626 are formed contiguous with each other. Because the bent edges 621, 624, 625, and 626 of the side cover 602 are formed contiguous with each other, the rigidity of the side cover 602 and the rigidity of the cowl 600 are improved.

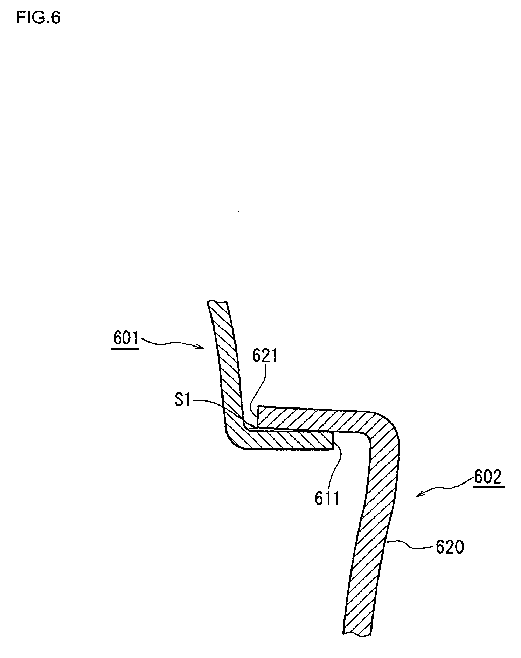

As shown in Fig. 2, in the embodiment, the first bent edge 621 of the side cover 602 is joined to the upper side part of the protruding portion 650 so as to overlap. Thus, the rigidity and the outward appearance of the cowl 600 are improved. In particular, the rigidity and the outward appearance of the protruding portion 650 are improved. Moreover, as shown in Figs. 3 and 6, in the embodiment, the first bent edge 621 of the side cover 602 is joined not only to the protruding portion 650 but also to the upper surface of the front cover 601 (first cover) so as to overlap. With such a structure, the outward appearance of the straddle-type vehicle 1000 is improved.

As illustrated, in the embodiment, the protruding portion 650 is formed from the side edge 611 of the front cover 601 (first cover) protruding toward the front of the straddle-type vehicle 1000. However, the protruding portion 650 may be formed from the side edge 641 of the inner fender 604 (third cover) protruding toward the front of the straddle-type vehicle 1000 (not shown).

Hereinafter, the straddle-type vehicle 1000 according to the embodiment is described further in detail.

As shown in Fig. 3, in the embodiment, the front cover 601 is disposed in front of the head pipe 201 and on the front side of the straddle-type vehicle 1000. Moreover, as shown in Fig. 2, the side cover 602 is attached to the edge 611 of the front cover 601 on either side in the vehicle width direction and disposed on either side of the straddle-type vehicle 1000 in the vehicle width direction. Moreover, the inner fender 604 is attached to the front edge 624 of the side cover 602 disposed on either side in the vehicle width direction. Furthermore, the leg shield 605 is attached to the rear edge 625 (third bent edge) of the side cover 602 (second cover) disposed on either side in the vehicle width direction. The under cover 606, which is disposed in the lower part of the straddle-type vehicle 1000, is attached to an edge (not shown) positioned below the leg shield 605.

As shown in Fig. 3, in the embodiment, the front cover 601 and the leg shield 605 of the cowl 600 are mounted on a bracket (not shown) disposed on the head pipe 201. As shown in Figs. 2 and 3, the inner fender 604 is attached to the front edge (second bent edge) 624 of the side cover 602 described above, a lower edge 614 of the front cover 601, and an upper front edge 664 of the under cover 606. In the embodiment, the inner fender 604 functions as a mudguard against mud splashed from the front wheel 250. The leg shield 605 is disposed in front of the rider's legs. Moreover, as shown in Fig. 2, in the embodiment, a headlight 120 is mounted on the front cover 601, and a front flasher 130 (turn signal) is mounted on the side cover 602.

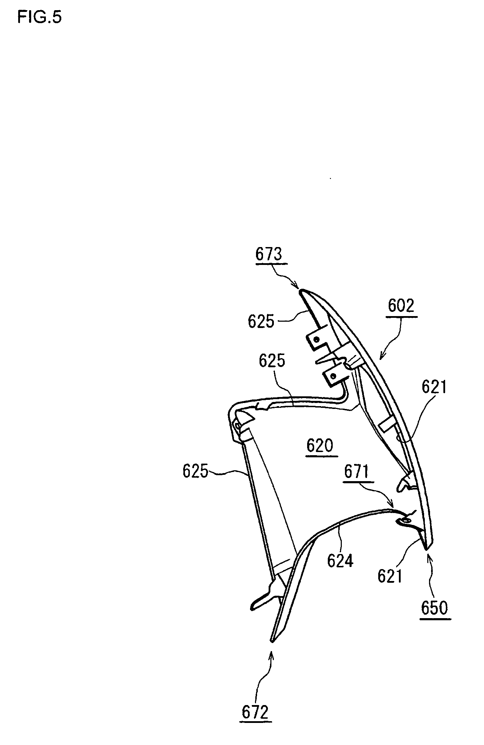

The edges 621, 624, and 625 of the side cover 602, which are shown in Figs. 4 and 5, are fitted onto the respective edges 611, 641, and 651 of the front cover 601, the inner fender 604, and the leg shield 605. The lower edge 626 of the side cover 602 is fitted onto the edge 661 of the under cover 606. That is, the side cover 602 is attached to the front cover 601, the inner fender 604, the leg shield 605, and the under cover 606.

As shown in Fig. 3, when attached to the straddle-type vehicle 1000, the edges 611, 641, 651, and 661 of the front cover 601, the inner fender 604, the leg shield 605, and the under cover 606 are disposed on a side of the straddle-type vehicle 1000.

On the other hand, the edges 621, 624, 625, and 626 of the side cover 602 are bent away from the covering surface 620 of the side cover 602 toward the inside of the straddle-type vehicle 1000. The edges 621, 624, 625, and 626 of the side cover 602 are joined to the side edges 611, 641, 651, and 661 of the front cover 601, the inner fender 604, the leg shield 605, and the under cover 606 from the outside. Thus, the side cover 602 is attached to the front cover 601, the inner fender 604, the leg shield 605, and the under cover 606. Therefore, the covers 601, 602, 604, 605, and 606 can be assembled easily.

That is, as shown in Fig. 5, in the embodiment, the edges 621, 624, and 625 of the side cover 602 are bent away from the covering surface 620 of the side cover 602 toward the inside of the straddle-type vehicle 1000, wherein the covering surface 620 is disposed so as to cover either side of the straddle-type vehicle 1000 in the vehicle width direction. As shown in Figs. 2 and 3, the edges 621, 624, and 625 of the side cover 602 are joined to the respective edges 611, 641, and 651 of the front cover 601, the inner fender 604, and the leg shield 605 so as to cover the edges 611, 641, and 651 from the outside. Moreover, as shown in Fig. 5, in the embodiment, the edge 626 of the side cover 602 is bent away from the covering surface 620 of the side cover 602 that is disposed so as to cover either side of the straddle type vehicle 1000 in the vehicle width direction toward the inside of the straddle type vehicle 1000. The edge 626 of the side cover 602 is joined to the edge 661 of the under cover 606 so as to cover the edge 661 from the outside.

In this embodiment, the edges 621, 624, 625, and 626 of the side cover 602 are bent along the outer sides of the respective edges 611, 641, 651, and 661 of the front cover 601, the inner fender 604, the leg shield 605, and the under cover 606.

In this embodiment, a part of the edges 621 and 624 of the side cover 602 that is joined to the edge 611 of the front cover 601 is formed contiguous with a part of the edges 621 and 624 of the side cover that is joined to the edge 641 of the inner fender 604.

Moreover, a part of the edges 624 and 626 of the side cover 602 that is joined to the edge 641 of the inner fender 604 is formed contiguous with a part of the edges 624 and 626 of the side cover 602 that is joined to the edge 661 of the under cover 606.

Moreover, a part of the edges 626 and 625 of the side cover 602 that is joined to the edge 661 of the under cover 606 is formed contiguous with a part of the edges 626 and 625 of the side cover 602 that is joined to the edge 651 of the leg shield 605.

Furthermore, a part of the edges 625 and 621 of the side cover 602 that is joined to the edge 651 of the leg shield 605 is formed contiguous with a part of the edges 625 and 621 of the side cover 602 that is joined to the edge 611 of the front cover 601.

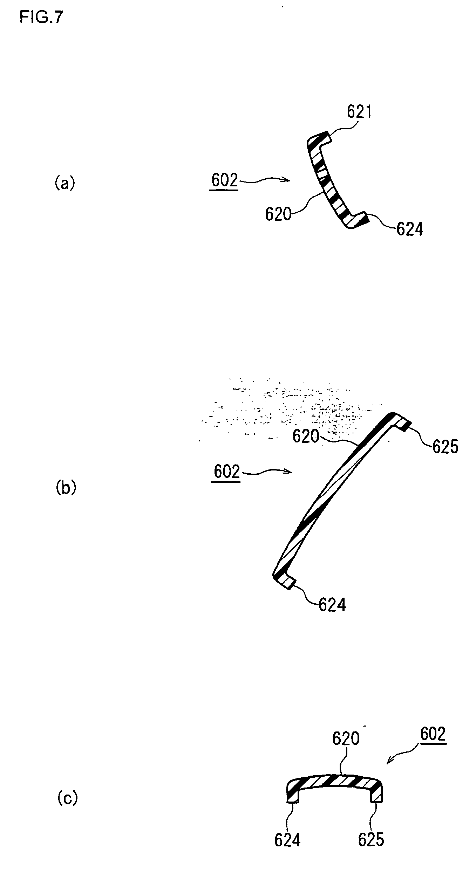

In this way, in the embodiment, the edges 621, 624, 625, and 626 of the side cover 602 are bent away from the covering surface 620 as shown in Figs. 7A to 7C. Moreover, in the embodiment, the edges 621, 624, 625, and 626 of the side cover 602, which are bent in this way, are contiguous around the entire perimeter. Because the bent edges 621, 624, 625, and 626 of the side cover are contiguous around the entire perimeter, the side cover 602 as a whole has high rigidity.

The side cover 602 can be joined to the front cover 601, the inner fender 604, the leg shield 605, and the under cover 606 in a state that the front cover 601, the inner fender 604, the leg shield 605, and the under cover 606 have been assembled together as shown in Fig. 3. At this time, as shown in Fig. 2, the edges 621, 624, 625, and 626 of the side cover 602 can be joined to the respective edges 611, 641, 651, 661 of the front cover 601, the inner fender 604, and the leg shield 605, and the under cover 606.

In the embodiment, the edges 621 and 624 (first bent edge and second bent edge) of the side cover 602 are bent away from the covering surface 620 along the outer sides of the edge 611 of the front cover 601 and the edge 641 of the inner fender 604. The bent edges 621 and 624 (first bent edge and second bent edge) of the side cover 602 are joined to the outer sides of the edge 611 of the front cover 601 and the edge 641 of the inner fender 604. In the embodiment, end faces of the edges of the front cover 601 and the inner fender 604 are covered with the side cover 602. Moreover, mating surfaces of the front cover 601 and the side cover 602 and mating surfaces of the inner fender 604 and the side cover 602 are oriented inward in the vehicle width direction of the straddle type vehicle 1000 such that the mating surfaces are not exposed to the outside. Therefore, the mating surfaces of these components are inconspicuous in the outward appearance of the straddle type vehicle 1000, thereby allowing the mating surfaces to have a good appearance.

In the embodiment, the front cover 601, the inner fender 604, and the leg shield 605, and the under cover 606 are assembled together as shown in Fig. 3, and then the side cover 602 is joined to the assembly. At this time, the side cover 602 covers the respective edges 611, 641, 651, and 661 of the front cover 601, the inner fender 604, the leg shield 605, and the under cover 606 from the outside in the vehicle width direction. Thus, the respective edges 611, 641, 651, and 661 of the front cover 601, the inner fender 604, the leg shield 605, and the under cover 606 are prevented from being exposed. Therefore, even if there are uneven or mismatching parts in the respective edges 611, 641, 651, and 661 of the front cover 601, the inner fender 604, the leg shield 605, and the under cover 606, the uneven or mismatching parts are not exposed and the outward appearance is not impaired. Such uneven or mismatching parts result from manufacturing errors or assembling errors. Because the outward appearance is not impaired in the embodiment even if there are uneven or mismatching parts in the edges 611, 641, 651, and 661, manufacturing errors or assembling errors in the front cover 601, the inner fender 604, the leg shield 605, and the under cover 606 can be allowed.

Moreover, as shown in Figs. 2 and 5, in the embodiment, the part of the edges 621 and 624 of the side cover 602 that is bent away from the covering surface 620 and joined to the edge 611 of the front cover 601 is contiguous with the part of the edges 621 and 624 of the side cover 602 that is joined to the edge 641 of the inner fender 604, as described above. In this case, at a contiguous part 671, the contiguous edges 621 and 624 of the side cover 602 are joined to the part at which the covering surface 620, and the edges 621 and 624 of the side cover 602 are joined. Thus, the rigidity of the cowl 600 is improved. Therefore, the cowl 600 is prevented from being damaged in the case of the vehicle falling on its side or other accidents.

In the embodiment, the edge 625 of the side cover 602 is bent away from the covering surface 620 along the outer side of the edge 651 of the leg shield 605 and joined to the outer side of the edge 651 of the leg shield 605. Thus, in the embodiment, the end face of the edge 651 of the leg shield 605 is covered with the side cover 602, and mating surfaces of the leg shield 605 and the side cover 602 are oriented inward in the vehicle width direction of the straddle type vehicle 1000 and not exposed to the outside. Therefore, the mating surfaces of these components are inconspicuous in the outward appearance of the straddle type vehicle 1000, thereby allowing the mating surfaces to have a good appearance.

As shown in Figs. 2 and 5, in the embodiment, the part of the edges 624 and 626 (second bent edge and third bent edge) of the side cover 602 that is bent away from the covering surface 620 and joined to the edge 641 of the inner fender 604 is formed contiguous with the part of the edges 624 and 626 that is joined to the edge 661 of the under cover 606, as described above. In this case, at a contiguous part 672, the side cover 602 has a three-dimensional shape in which the corresponding three faces of the covering surface 620, the edge 624, and the edge 625 are contiguous. Having such a shape, the contiguous part 672 has high rigidity and serves to improve the rigidity of the side cover 602 and the cowl 600. Therefore, the side cover 602 and the cowl 600 are prevented from being damaged in the case of the vehicle falling on its side or other accidents.

In this embodiment, as shown in Figs. 2 and 5, the part of the edges 626 and 625 of the side cover 602 that is bent away from the covering surface 620 and joined to the edge 661 of the under cover 606 and a part of the edges 626 and 625 of the side cover 602 that is joined to the edge 651 of the leg shield 605 are formed contiguous with each other. In this case, at a part 673 at which the edges 626 and 625 are formed contiguous with other, the side cover 602 has a three-dimensional shape in which the corresponding three faces of the covering surface 620, the edge 626, and the edge 625 are contiguous. Having such a shape, the part 673 has high rigidity.

As shown in Figs. 2 and 5, in the embodiment, the part of the edges 625 and 621 of the side cover 602 that is bent away from the covering surface 620 and joined to the edge 651 of the leg shield 605 is contiguous with the part of the edges 625 and 621 that is joined to the edge 611 of the front cover 601. In this case, at a contiguous part 674, the side cover 602 has a three-dimensional shape in which the corresponding three faces of the covering surface 620, the edge 625, and the edge 621 are contiguous. Having such a shape, the contiguous part 674 has high rigidity and serves to improve the rigidities of the side cover 602 and the cowl 600. Therefore, the side cover 602 and the cowl 600 are prevented from being damaged in the case of the vehicle falling on its side or other accidents.

That is, in the straddle-type vehicle 1000, the rigidity of the side cover 602 and the rigidity of the cowl 600 are improved at the respective joining parts 671 to 674 of the front cover 601, the inner fender 604, the leg shield 605, and the under cover 606. Therefore, the side cover 602 and the cowl 600 are prevented from being damaged in the case of the vehicle falling on its side or other accidents. Moreover, because the joining parts 671 to 674 are respectively covered with the side cover 602 from the side, the joining parts 671 to 674 are inconspicuous in the outward appearance of the straddle-type vehicle 1000, thereby allowing the vehicle to have a good appearance.

As shown in Fig. 5, in the embodiment, the joining parts 671 to 674 of the edges 621, 624, 625, and 626 of the side cover 602 at which the edges 621, 624, 625, and 626 are joined to the above-described components 601, 604, 605, and 606 are respectively contiguous with each other. With each part 671 to 674, rigidities of the side cover 602 and the cowl 600 are improved. Although all edges 621, 624, 625, and 626 of the side cover 602 are formed contiguous at the parts 671 to 674 in this embodiment, only the parts for which higher rigidity is desired may be formed contiguous as necessary, and not all parts need to be formed contiguous.

In the embodiment, not only the parts 671 to 674, but also the above-described first bent edge 621, the second bent edge 624, and the third bent edges 625 and 626 of the side cover 602 are formed contiguous. Thus, because the bent edges 621, 624, 625 and 626 of the side cover 602 are formed contiguous, the rigidity of the side cover 602 and the rigidity of the cowl 600 are improved.

Although all edges 621, 624, 625, and 626 of the side cover 602 are contiguous, it is sufficient that only the parts at which higher rigidity is desired may be made contiguous as necessary, and not all parts need to be contiguous. For example, there is a case when the side cover 602 needs to have a desired degree of flexibility so that the side cover 602 can be assembled easily or so that assembly errors of components of the cowl 600 can be absorbed when assembled. In such a case, in order to assure the desired degree of flexibility, the edges 621, 624, 625, and 626 of the side cover 602 may have notches in appropriate positions. It is preferable that the notches be disposed, for example, in positions such that the rigidity of the cowl 600 is not affected so much when the side cover is attached to the cowl 600, or in positions inconspicuous in the outward appearance of the straddle-type vehicle 1000.

As shown in Fig. 2, in the embodiment, the first bent edge 621 of the side cover 602 is joined to the upper side part of the protruding portion 650 so as to overlap. Moreover, as shown in Figs. 3 and 6, in the embodiment, the first bent edge 621 of the side cover 602 is joined not only to the protruding portion 650 but also to the upper surface of the front cover 601 (first cover) so as to overlap.

That is, as shown in Figs. 2 to 4, in the embodiment, the protruding portion (recess-containing protrusion) 650 that protrudes forward is formed on either side of the cowl 600. Having a three-dimensional shape, demolding of the protruding portion 650 may be complicated when the protruding portion 650 and parts having other shapes are molded together by plastic molding. However, in the embodiment, the protruding portion 650 is formed with the front cover 601 and the side cover 602. At the protruding portion 650, the edge 621 of the side cover 602 is joined to the upper surface of the edge 611 of the front cover 601 so as to overlap.

With such a structure, the protruding portion 650 is divided into parts conveniently. Because the front cover 601 and the side cover 602 do not have overhung portions, demolding is easy for the protruding portion 650 when it is molded together with parts having other shapes by plastic molding. In the embodiment, in the cowl 600 disposed around the head pipe 201, the first cover 601, which is disposed in front of the head pipe 201 and at the front of the straddle type vehicle 1000, and the second cover 602, which is disposed on either side of the straddle type vehicle 1000 in the vehicle width direction, are provided as independent components.

As shown in Figs. 7A to 7C, in the embodiment, the covering surface 620 of the side cover 602 serving as the second cover 602 is outwardly curved. Moreover, the edges 621, 624, 625, and 626 of the side cover 602 are bent away from the covering surface 620 toward the inside of the straddle-type vehicle 1000. That is, as shown in Figs. 7A to 7C, in the embodiment, the side cover 602 serving as the second cover 602 has the outwardly-curved covering surface 620 from which the peripheral edges are bent substantially in the same direction. The side cover 602 is provided as a component independent of the front cover 601. Therefore, by demolding in the vehicle width direction, the shape can be formed by molding with relatively simple mold structures that include few complicated demolding mechanisms such as an insert or a moving mold. In particular, in the embodiment, the protruding portion 650 protruding forward is formed on either side of the cowl 600. The protruding portion 650 is a recess-containing protrusion having a space therein formed with the side cover 602 and the front cover 601. In the embodiment, the edges 621, 624, 625, and 626 of the side cover 602 are bent away from the covering surface 620 toward the inside of the straddle-type vehicle 1000. Moreover, one of the edges (first bent edge 621) of the side cover 602 is joined to the side edge 611 of the front cover 601 (first cover) from the outside. In this case, the side cover 602 and the front cover 601 can be formed by molding with relatively simple mold structure. With such a structure, even for the cowl 600 having the protruding portion 650, equipment cost and manufacturing cost can be kept low.

Being disposed at the front of the straddle type vehicle 1000, the vehicle body cover is a component to which various design ideas are applied. To realize a diversified design, it is preferable that the vehicle body cover as such a component have a greater flexibility in shape. In the embodiment, the vehicle body cover includes the front cover 601 serving as the first cover disposed in front of the head pipe and at the front of the straddle type vehicle, the side cover 602 serving as the second cover mounted on an edge of the first cover in the vehicle width direction and disposed on either side of the straddle type vehicle in the vehicle width direction, and the leg shield 605 serving as the third cover mounted on the front edge of the second cover. The covers 601, 602 and 605 have considerable degree of flexibility in demolding directions when molded with molds, thereby increasing the flexibility in shape. Thus, a more diversified design is provided for the vehicle body cover that is disposed at the front of the straddle type vehicle 1000.

In this embodiment, as shown in Fig. 6, the part 611 of the front cover 601 that is joined to the edge 621 of the side cover 602 extends in the vehicle width direction, and the edge 621 of the side cover 602 covers the upper surface of the part 611 of the front cover 601 extending in the vehicle width direction. In this embodiment, when the straddle type vehicle is used for riding on a rainy day, rainwater flowing on the front cover 601 might collect on the upper surface of the part 611. However, in this embodiment, a small gap S 1 is provided at a position at which the upper surface of the part 611 and the edge 621 of the side cover 602 are joined. Due to the capillary action by the gap S1, the rainwater moves into the gap S 1 between the upper surface of the part 611 and the edge 621 of the side cover 602. Then, the water that has infiltrated into the gap S1 flows along the back side of the side cover 602 and is drained out of the cowl 600.

In the embodiment, the side cover 602 can be fitted onto the front cover 601, the inner fender 604, and the leg shield 605 after the covers 601, 604, and 605 have been assembled together as shown in Fig. 3. Moreover, as shown in Fig. 3, the side cover 602 can be easily removed from the cowl 600 without disassembling the front cover 601, the inner fender 604, and the leg shield 605. Therefore, maintenance or other operations inside the cowl 600 (such as replacement of a headlight bulb) can be carried out easily.

Heretofore, the cowl (vehicle body cover) around the head pipe of the straddle type vehicle according to an embodiment of the invention has been described. However, the vehicle body cover according to the invention is not limited to the above-described embodiment.

For example, the straddle type vehicle is not limited to the vehicle of the above-described embodiment. The specific shape of the vehicle body cover is not limited to the above-described embodiment. The configuration of the vehicle body cover according to the invention can be applied to various straddle-type vehicles. For example, in the above-described embodiment, the front cover 601, the side cover 602, and the inner fender 604 are described as examples of the first cover, the second cover, and the third cover, respectively. However, the first cover, the second cover, and the third cover according to the invention are not limited to the components that function as the front cover 601, the side cover 602, and the inner fender 604, respectively.

## Claims

1. A straddle-type vehicle (1000) including a head pipe (201) through which a steering shaft (210) is inserted in a front portion of a vehicle body frame (200), comprising:
a first cover (601) at least a part of which is disposed in front of the head pipe (201) in side view of the straddle-type vehicle (1000);
a third cover (604) adjacent to the first cover (601), at least a part of the third cover (604) being disposed below the head pipe (201) in side view of the straddle-type vehicle (1000);
a second cover (602) at least a part of which is disposed on a side of the vehicle body frame (200) in front view of the straddle-type vehicle (1000), the second cover (602) including
a covering surface (620) that covers a side of the vehicle (1000),
a first bent edge (621) that is bent away from the covering surface (620) toward the inside of the straddle-type vehicle (1000) and joined to a side edge (611) of the first cover (601) from the outside, and
a second bent edge (624) that is bent away from the covering surface (620) toward the inside of the straddle-type vehicle (1000) and joined to a side edge (641) of the third cover (604) from the outside; and
a protrusion (650) in which the side edge (611) of the first cover (601) or the third cover (604) protrudes in a forward direction of the straddle-type vehicle (1000),
**characterized in that**
a side of the protrusion (650) being covered with the covering surface (620) of the second cover (602), and
wherein the side edge (611) of the first cover (601) extends in a vehicle width direction and the first bent edge (621) is joined to an upper surface of the side edge (611) of the first cover (601) so as to cover it.

2. The straddle-type vehicle (1000) according to Claim 1, wherein the first bent edge (621) and the second bent edge (624) are contiguously formed.

3. The straddle-type vehicle (1000) according to Claim 1 or 2, further comprising a fourth cover (605, 606) disposed behind the first cover (601) or the third cover (604), wherein
the second cover (602) includes a third bent edge (625, 626) bent away from the covering surface (620) toward the inside of the straddle-type vehicle (1000) and joined to a side edge (651, 661) of the fourth cover (605, 606) from the outside.

4. The straddle-type vehicle (1000) according to Claim 3, wherein the first bent edge (621) and the third bent edge (625, 626) are contiguously formed.

5. The straddle-type vehicle (1000) according to Claim 3, wherein the second bent edge (624) and the third bent edge (625, 626) are contiguously formed.

6. The straddle-type vehicle (1000) according to Claim 3, wherein the first bent edge (621), the second bent edge (624), and the third bent edge (625, 626) are formed contiguous.

7. The straddle-type vehicle (1000) according to Claim 1, wherein the first bent edge (621) is joined to an upper side part of the protrusion (650) so as to cover it.

## Patentansprüche

1. Ein Fahrzeug (1000) vom rittlings zu fahrenden Typ, das ein Kopfrohr (201) umfasst, durch das eine Lenkwelle (210) in einen vorderen Abschnitt eines Fahrzeugkarosserierahmens (200) eingefügt ist, mit folgenden Merkmalen:
einer ersten Abdeckung (601), wobei zumindest ein Teil derselben in einer Seitenansicht des Fahrzeugs (1000) vom rittlings zu fahrenden Typ vor dem Kopfrohr (201) angeordnet ist;
einer dritten Abdeckung (604) neben der ersten Abdeckung (601), wobei zumindest ein Teil der dritten Abdeckung (604) in einer Seitenansicht des Fahrzeugs (1000) vom rittlings zu fahrenden Typ unter dem Kopfrohr (201) angeordnet ist;
einer zweiten Abdeckung (602), wobei zumindest ein Teil derselben in einer Vorderansicht des Fahrzeugs (1000) vom rittlings zu fahrenden Typ auf einer Seite des Fahrzeugkarosserierahmens (200) angeordnet ist, wobei die zweite Abdeckung (602) folgende Merkmale umfasst:
eine Abdeckoberfläche (620), die eine Seite des Fahrzeugs (1000) bedeckt,
eine erste gebogene Kante (621), die von der Abdeckoberfläche (620) weg und in Richtung des Inneren des Fahrzeugs (1000) vom rittlings zu fahrenden Typ gebogen und von außen mit einer Seitenkante (611) der ersten Abdeckung (601) verbunden ist, und
eine zweite gebogene Kante (624), die von der Abdeckoberfläche (620) weg und in Richtung des Inneren des Fahrzeugs (1000) vom rittlings zu fahrenden Typ gebogen und von außen mit einer Seitenkante (641) der dritten Abdeckung (604) verbunden ist; und
einem Vorsprung (650), in dem die Seitenkante (611) der ersten Abdeckung (601) oder der dritten Abdeckung (604) in einer Vorwärtsrichtung des Fahrzeugs (1000) vom rittlings zu fahrenden Typ vorspringt,
**dadurch gekennzeichnet, dass**
eine Seite des Vorsprungs (650) mit der Abdeckoberfläche (620) der zweiten Abdeckung (602) bedeckt ist, und
wobei sich die Seitenkante (611) der ersten Abdeckung (601) in einer Fahrzeugbreitenrichtung erstreckt und die erste gebogene Kante (621) mit einer oberen Oberfläche der Seitenkante (611) der ersten Abdeckung (601) verbunden ist, um sie zu bedecken.

2. Das Fahrzeug (1000) vom rittlings zu fahrenden Typ gemäß Anspruch 1, bei dem die erste gebogene Kante (621) und die zweite gebogene Kante (624) aneinander angrenzend gebildet sind.

3. Das Fahrzeug (1000) vom rittlings zu fahrenden Typ gemäß Anspruch 1 oder 2, das ferner eine vierte Abdeckung (605, 606) aufweist, die hinter der ersten Abdeckung (601) oder der dritten Abdeckung (604) angeordnet ist, wobei die zweite Abdeckung (602) eine dritte gebogene Kante (625, 626) umfasst, die von der Abdeckoberfläche (620) weg und in Richtung des Inneren des Fahrzeugs (1000) vom rittlings zu fahrenden Typ gebogen und von außen mit einer Seitenkante (651, 661) der vierten Abdeckung (605, 606) verbunden ist.

4. Das Fahrzeug (1000) vom rittlings zu fahrenden Typ gemäß Anspruch 3, bei dem die erste gebogene Kante (621) und die dritte gebogene Kante (625, 626) aneinander angrenzend gebildet sind.

5. Das Fahrzeug (1000) vom rittlings zu fahrenden Typ gemäß Anspruch 3, bei dem die zweite gebogene Kante (624) und die dritte gebogene Kante (625, 626) aneinander angrenzend gebildet sind.

6. Das Fahrzeug (1000) vom rittlings zu fahrenden Typ gemäß Anspruch 3, wobei die erste gebogene Kante (621), die zweite gebogene Kante (624) und die dritte gebogene Kante (625, 626) aneinander angrenzend gebildet sind.

7. Das Fahrzeug (1000) vom rittlings zu fahrenden Typ gemäß Anspruch 1, bei dem die erste gebogene Kante (621) mit einem Oberseitenteil des Vorsprungs (650) verbunden ist, um ihn zu bedecken.

## Revendications

1. Véhicule de type à selle (1000) comportant un tube principal (201) à travers lequel un arbre de guidage (210) est introduit dans une partie avant d'un châssis de carrosserie de véhicule (200), comprenant:
un premier couvercle (601) dont au moins une partie est disposée devant le tube principal (201), en vue latérale du véhicule de type à selle (1000);
un troisième couvercle (604) adjacent au premier couvercle (601), au moins une partie du troisième couvercle (604) étant disposée au-dessous du tube principal (201), en vue latérale du véhicule de type à selle (1000);
un deuxième couvercle (602) dont au moins une partie est disposée sur un côté du châssis de carrosserie de véhicule (200), en vue frontale du véhicule de type à selle (1000), le deuxième couvercle (602) comportant
une surface de recouvrement (620) qui recouvre un côté du véhicule (1000),
un premier bord courbé (621) qui est courbé en s'éloignant de la surface de recouvrement (620) vers l'intérieur du véhicule de type à selle (1000) et uni à un bord latéral (611) du premier couvercle (601) depuis l'extérieur, et
un deuxième bord courbé (624) qui est courbé en s'éloignant de la surface de recouvrement (620) vers l'intérieur du véhicule de type à selle (1000) et uni au bord latéral (641) du troisième couvercle (604) depuis l'extérieur; et
une saillie (650) dans laquelle le bord latéral (611) du premier couvercle (601) ou du troisième couvercle (604) fait saillie dans une direction en avant du véhicule de type à selle (1000),
**caractérisé par le fait que**
un côté de la saillie (650) est recouvert par la surface de recouvrement (620) du deuxième couvercle (602), et
dans laquelle le bord latéral (611) du premier couvercle (601) s'étend dans un sens de la largeur du véhicule et le premier bord courbé (621) est uni à une surface supérieure du bord latéral (611) du premier couvercle (601) de manière à le recouvrir.

2. Véhicule de type à selle (1000) selon la revendication 1, dans lequel le premier bord courbé (621) et le deuxième bord courbé (624) sont formés de manière contiguë.

3. Véhicule de type à selle (1000) selon la revendication 1 ou 2, comprenant par ailleurs un quatrième couvercle (605, 606) disposé derrière le premier couvercle (601) ou le troisième couvercle (604), dans lequel
le deuxième couvercle (602) comporte un troisième bord courbé (625, 626) courbé en s'éloignant de la surface de recouvrement (620) vers l'intérieur du véhicule de type à selle (1000) et uni à un bord latéral (651, 661) du quatrième couvercle (605, 606) depuis l'extérieur.

4. Véhicule de type à selle (1000) selon la revendication 3, dans lequel le premier bord courbé (621) et le troisième bord courbé (625, 626) sont formés de manière contiguë.

5. Véhicule de type à selle (1000) selon la revendication 3, dans lequel le deuxième bord courbé (624) et le troisième bord courbé (625, 626) sont formés de manière contiguë.

6. Véhicule de type à selle (1000) selon la revendication 3, dans lequel le premier bord courbé (621), le deuxième bord courbé (624) et le troisième bord courbé (625, 626) sont formés de manière contiguë.

7. Véhicule de type à selle (1000) selon la revendication 1, dans lequel le premier bord courbé (621) est uni à une partie du côté supérieur de la saillie (650) de manière à le recouvrir.
